# EUROPÄISCHE PATENTSCHRIFT

(11) **EP 1 585 372 B1**
(45) Veröffentlichungstag und Bekanntmachung des Hinweises auf die Patenterteilung: **10.07.2013**
(21) Anmeldenummer: 05004714.1
(22) Anmeldetag: 03.03.2005
(51) Int. Cl.: H05B 41/288, H05B 41/38

(54) **EVG mit Resonanzanregung zur Übernahmespannungserzeugung**
Electronic ballast with resonance excitation for voltage generation takeover
Ballast électronique avec exitation par résonance se chargeant de la génération de tension

(30) Priorität: 08.04.2004 DE 102004017479
(43) Veröffentlichungstag der Anmeldung: 12.10.2005
(73) Patentinhaber: OSRAM GmbH, 80807 München (DE)
(72) Erfinder: Braun, Alois, 86633 Neuburg (DE); Kang, Young G., 60061 Vernon Hills IL (US); Limmer, Walter, 80337 München (DE); Mühlschlegel, Joachim, 82194 Gröbenzell (DE)

(56) Entgegenhaltungen:
- WO-A-2004/064457
- DE-A1- 10 210 629
- DE-A1- 19 644 115
- US-A- 5 426 350
- US-A- 5 623 187
- US-A- 5 696 798
- US-A- 5 932 976
- US-A1- 2002 047 609
- US-B1- 6 414 448

## Beschreibung

### Technisches Gebiet

Diese Erfindung bezieht sich auf elektronische Vorschaltgeräte und Betriebsverfahren für Hochdruckentladungslampen.

### Stand der Technik

In der Schrift WO 2004/064457 (van Casteren) wird eine Halbbrückenschaltung mit zwei Halbbrückenschaltern beschrieben, die zum Betrieb einer Hochdruck Entladungslampe geeignet ist. Zur Zündung der Lampe enthält die Schaltung einen LC-Resonanzkreis, der durch einen dritten Schalter angeregt wird.

In der Schrift US 6,414,448 (Noone) wird ebenfalls eine Halbbrückenschaltung zum Betrieb einer Hochdruck Entladungslampe beschrieben. Ein weiterer Schalter steuert dabei den Energieeintrag in den LC-Resonanzkreis.

In der Schrift US 5,623,187 (Caldeira) ist ist eine Halbbrückenschaltung zum Betrieb einer Hochdruckentladungslampe beschrieben, wobei die Halbbrückenschaltung von einem Aufwärtswandler gespeist wird. Zur besseren Zündung der Lampe stellt der Aufwärtswandler während der Zündung eine erhöhte Spannung bereit.

In der Schrift US 5,932,976 (Maheshwari) wird eine Vollbrückenschaltung zum Betrieb einer Hochdruck Entladungslampe beschrieben. Zur Zündung der Lampe wird nur eine Ast der Vollbrücke als Halbbrücke betrieben. Diese Halbbrücke wird mit einer Frequenz geschaltet, die einen LC-Resonanzkreis anregt und eine Zündspannung erzeugt.

In der Schrift US 5,426,350 (Lai) wird ein Betriebsgerät für Gasentladungslampen beschrieben, das zwei LC-Resonanzkreise enthält. Ein Resonanzkreis wird zur Zündung angeregt, während der andere Resonanzkreis nach der Zündung den Betrieb der Lampe gewährleistet.

In der Schrift DE 196 44 115 A1 wird ein Betriebsgerät für Gasentladungslampen beschrieben, welches einen Resonanzkreis zur Erhöhung der Übernahmespannung aufweist, und mittels eines Impulszündgerätes über eine kapazitiv wirkende Hilfszündelektrode die Gasentladungslampe zündet.

Es ist an sich bekannt, Hochdruckentladungslampen mit elektronischen Vorschaltgeräten zu betreiben, die Wandler mit einem oder einer Mehrzahl Schalttransistoren aufweisen. Häufig sind Vollbrückenwandler. Während des Dauerbetriebs der Lampe erzeugen diese Wandler vereinfacht ausgedrückt in ihrer Polarität niederfrequent alternierende Gleichspannungs-Versorgungsleistungen für die Lampe. Dabei werden bei einem echten und damit asymmetrischen Gleichstrombetrieb auftretende störende Phänomene in der Lampe vermieden und gleichzeitig ebenfalls störende höhere Frequenzen von der Lampe weitgehend ferngehalten.

Es ist insbesondere notwendig, mit Filterkondensatoren verbleibende sog. Ripplestromanteile in der Versorgungsleistung für die Lampe auszufiltern bzw. zu begrenzen. Im Folgenden ist dabei von einem Filterkondensator die Rede, womit allerdings auch Varianten mit einer Mehrzahl Filterkondensatoren gemeint sind.

Wenn Hochdruckentladungslampen gezündet werden, muss eine Zündspannung in erheblicher Höhe zur Verfügung gestellt werden, beispielsweise in einem Bereich von 1,5 kV bis 5 kV (einfache Amplitude). Die gezündete Lampe benötigt für eine gewisse Übergangszeit eine sog. Übernahmespannung, die gegenüber der notwendigen Spannung der Dauerbetriebs-Versorgungsleistung erhöht ist.

### Darstellung der Erfindung

Der Erfindung liegt das technische Problem zugrunde, ein elektronisches Vorschaltgerät zum Betreiben einer Hochdruckentladungslampe und ein entsprechendes Betriebsverfahren anzugeben, bei denen in einer günstigen Weise die Übernahmespannung erzeugt und kontrolliert werden kann.

Die Erfindung bezieht sich auf ein elektronisches Vorschaltgerät zum Betreiben einer Hochdruckentladungslampe mit einem Wandler beinhaltend eine Halbbrücke mit zwei Schalttransistoren zum Erzeugen einer Versorgungsleistung zum Dauerbetrieb der Lampe durch einen Schaltbetrieb der Schalttransistoren und mit einem Filterkondensator zum Filtern von Ripplestörungen in der Versorgungsleistung für die Lampe, wobei der Filterkondensator Teil einer Resonanzschaltung ist. Das Vorschaltgerät ist dazu ausgelegt, durch einen hochfrequenten Betrieb der Schalttransistoren des Wandlers eine Resonanz der Resonanzschaltung anzuregen, um damit eine gegenüber der Dauerbetriebs-Versorgungsleistung spannungsüberhöhte Leistung für die Lampe während einer an eine Zündung anschließende Übernahmephase zu erzeugen.

Eine Steuerung der Amplitude der Resonanzanregung erfolgt erfindungsgemäß auch dadurch, dass - ähnlich dem Tiefsetzerbetrieb während des Lampendauerbetriebs - während einer leitenden Schaltphase der Schalttransistoren durch ein wiederholtes Ausschalten ("Zerhacken") mit einer gegenüber der Resonanzfrequenz deutlich erhöhten Frequenz quasi eine mittlere Amplitudenabsenkung erreicht wird. Zusätzlich oder alternativ kann auch die zeitliche Dauer der Einschaltphase der Schalttransistoren insgesamt begrenzt werden und deutlich geringer als ein hälftiger Zeitanteil ausfallen.

Weiterhin bezieht sich die Erfindung auf ein entsprechendes Beleuchtungsgerät mit einem solchen Vorschaltgerät und einer passenden Hochdruckentladungslampe und schließlich auf ein entsprechendes Betriebsverfahren zum Betreiben einer Hochdruckentladungslampe.

Bevorzugte Ausgestaltungen sind in den abhängigen Ansprüchen angegeben.

Die Grundidee der Erfindung besteht darin, die Übernahmespannung durch eine Resonanzanregung zu erzeugen und dabei als kapazitives Element einer Resonanzschaltung den Filterkondensator zu verwenden, der ohnehin zum Ausfiltern der Ripplestromanteile vorgesehen ist. Die Anregung der Resonanzschaltung soll durch denselben Wandler erfolgen, mit dem der Dauerbetrieb der Lampe bewerkstelligt wird. Es sollen also möglichst ohnehin vorhandene Bestandteile der Schaltung ausgenutzt werden. Insbesondere soll der Schaltbetrieb der Schalttransistoren, die auch für den Dauerbetrieb verwendet werden, zur Resonanzanregung eingesetzt werden. Die Resonanzanregung erfolgt mit einer Anregungsgrundfrequenz des Schaltbetriebs der Schalttransistoren (S₁, S₂). Die Einschaltphase des jeweils leitenden Schalttransistors wird mit einer Modulationsfrequenz, die über der Frequenz zur Resonanzanregung liegt, unterbrochen, was durch "Zerhacken" oder Modulation beschrieben werden kann.

Insgesamt bietet die Erfindung damit den Vorteil, mit einem geringen Aufwand die erforderlichen erhöhten Übernahmespannungen zu erzeugen und zu kontrollieren, ohne deswegen die sog. Zwischenkreisspannung, mit der der Wandler i. d. R. versorgt wird, deutlich erhöhen zu müssen.

Vorzugsweise wird als induktives Element der Resonanzschaltung eine aus anderen Gründen ohnehin vorhandene Lampendrossel oder Tiefsetzerdrossel verwendet. Eine solche Drossel ist zum einen wegen der in vielen Fällen teilweise negativen differentiellen Impedanz von Hochdruckentladungslampen und/oder zum anderen wegen der im Folgenden noch erläuterten Tiefsetzerfunktion notwendig. Vorzugsweise sind dabei in der Resonanzschaltung als eigentlich an der Resonanz beteiligte Elemente keine weiteren Elemente vorgesehen, wobei natürlich der Filterkondensator und die Lampendrossel mehrteilig sein können, wie für den Filterkondensator bereits früher erwähnt.

Die erfindungsgemäße Halbbrücke kann im Dauerbetrieb der Lampe so betrieben werden, dass sie einerseits als niederfrequenter Inverter für die bereits eingangs geschilderte "Symmetrisierung" des Lampenbetriebs durch Vorzeichenumkehr arbeitet. Andererseits kann der Lampenbetrieb dabei außerdem mit einer gegenüber der Zwischenkreisspannung herabgesetzten Spannung erfolgen, wozu die Halbbrücke mit dem jeweils leitenden Schalttransistor innerhalb einer Halbperiode des Inverterbetriebs ähnlich einem Tiefsetzer die Zwischenkreisspannung herabsetzt. Dieser Tiefsetzerbetrieb der Schalttransistoren der Halbbrücke kann in eine Lampenstromregelung eingebunden sein.

Die für die Erfindung charakteristische Resonanzanregung erfolgt vorzugsweise mit einer Frequenz unterhalb der Resonanzfrequenz der Resonanzschaltung. Konventioneller Weise nähert man sich bei der Ausnutzung von Resonanzüberhöhungen in elektronischen Vorschaltgeräten für Lampen Resonanzfrequenzen von oben her kommend an. Im vorliegenden Fall soll dies umgekehrt erfolgen. Dies hat aus folgenden Gründen Vorteile: Eine gute Filterwirkung des Filterkondensators bedingt eine gewisse Mindestkapazität des Filterkondensators. Andererseits soll die Lampendrossel oder eine andere Resonanzdrossel aus Kosten- und Platzgründen nicht unnötig groß sein. Wenn es nun durch die Umladevorgänge bei der Resonanzanregung zu einer Sättigung der Drossel kommt, so würde sich deren Induktivität verändern und die Resonanzschaltung selbsttätig ihre Resonanzfrequenz erhöhen. Dies würde bei einer Annäherung von höheren Frequenzen her zu einem instabilen Zustand und zu einer erheblichen Bauteilbelastung führen. Um solche instabilen Verhältnisse kontrollieren zu können, sind relativ schnelle Regler und relativ schnelle Spannungs- oder Strommessungen notwendig. Die Erfindung umgeht dieses Problem durch Annäherung von tiefen Frequenzen her.

Dabei ist hier die Grundfrequenz der Resonanzanregung gemeint. Da die Anregung im Regelfall nicht mit reinen Sinusfunktionen sondern mit mehr oder weniger rechteckig geformten Funktionen erfolgen wird, können natürlich Fourieranteile mit Frequenzen über der Resonanzfrequenz auftreten. Diese haben jedoch entsprechend geringere Amplituden.

Ein bevorzugter Wert für die Anregungsfrequenz sollte möglichst nicht über dem 0,9-fachen der Resonanzfrequenz liegen. Andererseits kann es vorteilhaft sein, wenn die Anregungsfrequenz, obwohl in vielen Fällen keine allzu starke Resonanzüberhöhung notwendig ist, um eine ausreichende Übernahmespannung zu erzeugen, nicht unter dem 0,4-fachen der Resonanzfrequenz liegt. Dies liegt daran, dass die Rechteckfunktionen eine starke Harmonische bei der dreifachen Grundfrequenz aufweisen, die bei Grundfrequenzen unterhalb der 0,4-fachen Resonanzfrequenz nah an die Resonanzfrequenz heranrücken. Günstig sind Werte zwischen dem 0,4- und 0,6-fachen der Resonanzfrequenz. Allerdings ist es im Rahmen dieser Erfindung auch durchaus möglich, mit relativ niedrigen Anregungsfrequenzen zu arbeiten, die deutlich unterhalb der 0,4-fachen Resonanzfrequenz liegen. Dabei ist dann die Spannungserhöhung im Sinne einer Sprungantwort zu verstehen, erfolgt also gewissermaßen hauptsächlich durch die Oberschwingungen des Anregungssprungs. (Mit Anregungssprung ist hier allerdings nicht eine einmalige Anregung sondern lediglich die Tatsache gemeint, dass die Frequenz deutlich kleiner als die Resonanzfrequenz ist.)

Es wurde bereits erwähnt, dass der Filterkondensator zu Gunsten einer guten Filterwirkung eine gewisse Mindestkapazität aufweisen soll. Bevorzugt sind Werte von mehr als 1 nF/Watt Lampenleistung, insbesondere von mehr als 1,2 oder 1,3 nF/Watt. Bei mehreren Kondensatoren gilt dies natürlich für die effektive Gesamtkapazität.

Die auftretenden Spannungsüberhöhungen sollten vorzugsweise zu Amplituden im Bereich von bis zu 800 V (einfache Amplitude) führen. Es ist nämlich insbesondere bevorzugt, mit der erfindungsgemäßen Resonanzüberhöhung nur die Übernahmespannung und nicht die Zündspannung zu erzeugen. Auch die Zündspannung durch Resonanzüberhöhung zu erzeugen, führt zu erheblich größeren Strömen und zu einer erheblich größeren Nähe zur Resonanzfrequenz. Damit ergeben sich nachteilige Auswirkungen für die zulässige Kapazität des Filterkondensators, der als Resonanzkondensator dient, und/oder für die Bemessung der Drossel. Da aber angestrebt wird, mit einem ausreichend großen Filterkondensator einerseits und mit einer nicht zu großen Lampendrossel bzw. anderen Resonanzdrossel andererseits zu arbeiten, wird die Zündspannung selbst vorzugsweise durch eine eigene Zündschaltung erzeugt. Dabei kann es sich insbesondere um eine an sich bekannte Zündschaltung mit einem Zündkondensator handeln, dessen Entladung, ggf. nach Hochtransformation, zur Zündung führt.

### Kurze Beschreibung der Zeichnungen

Im Folgenden wird die Erfindung anhand eines Ausführungsbeispiels näher erläutert. Insbesondere bezieht sich die vorstehende wie die nachfolgende Beschreibung immer sowohl auf die Vorrichtungs- als auch auf die Verfahrenskategorie der Erfindung.
- Figur 1: zeigt ein schematisches Schaltdiagramm eines erfindungsgemäßen Vorschaltgeräts.
- Figur 2: zeigt schematisierte Zeitverlaufsdiagramme zur Illustration der Taktung von Transistoren des Vorschaltgeräts aus Figur 1.
- Figur 3: zeigt Messdiagramme zum Betrieb des Vorschaltgeräts aus Figur 1 bei einer Taktung gemäß Figur 2.

### Bevorzugte Ausführung der Erfindung

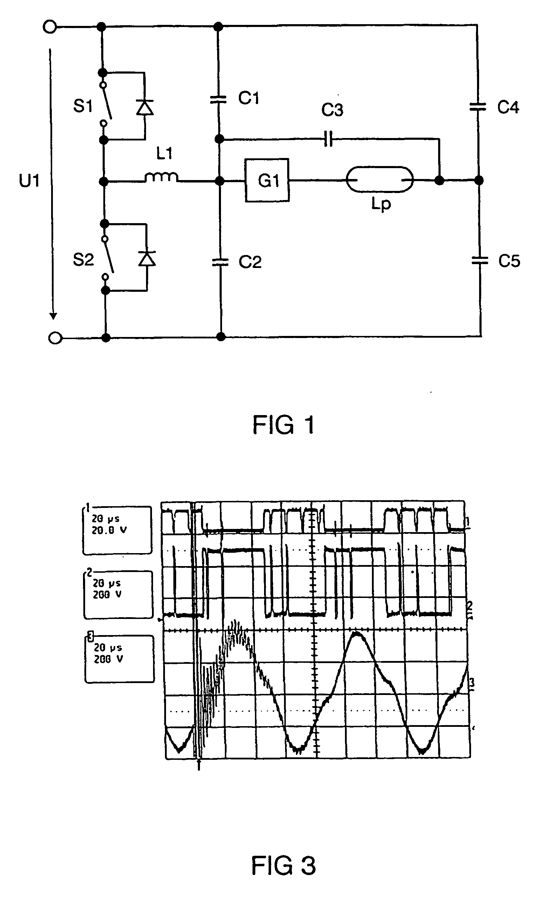

Figur 1 zeigt eine an sich bekannte Halbbrückentopologie mit zwei Schalttransistoren S₁ und S₂. Diese liegen seriell zwischen zwei Versorgungsästen, zwischen denen eine Zwischenkreisspannung U₁ anliegt. Die Zwischenkreisspannung U₁ kann durch Gleichrichtung einer Netzspannung mit entsprechender Filterung und eventuell Leistungsfaktorkorrektur erzeugt werden.

Durch einen alternierenden Schaltbetrieb der Halbbrückentransistoren S₁ und S₂ wird ein Mittenabgriff dazwischen hin und her geschaltet zwischen den Potentialen der Versorgungsäste. Dementsprechend liegt an dem linken Anschluss einer in Figur 1 eingezeichneten Drossel L₁ ein diesem Schaltbetrieb entsprechendes hochfrequentes Wechselpotential an. Die Drossel L₁ liegt seriell zu einer Hochdruckentladungslampe Lp, wobei ein dazwischen geschalteter Block G₁ für eine an sich bekannte Zündschaltung steht. Diese erzeugt in einer für die Erfindung nicht näher interessierenden Weise durch eine Kondensatorentladung und Hochtransformation einen Zündpuls zum Zünden der Lampe Lp. Der rechte Anschluss der Lampe Lp ist über zwei Koppelkondensatoren C₄ und C₅ mit den beiden Versorgungsästen verbunden. Die Koppelkondensatoren C₄ und C₅ stellen sicher, dass der rechte Anschluss der Lampe Lp ein Potential in der Mitte zwischen den Potentialen der Versorgungsäste hat. Die Schaltung ist somit also in der Lage, über der Lampe Lp die halbe Zwischenkreisspannung zu erzeugen. Parallel zu der Lampe Lp liegt ein Filterkondensator C₃. Ein Abgriff zwischen der Lampendrossel L₁ und der Zündschaltung G₁ ist über zwei Filterkondensatoren C₁ und C₂ jeweils mit den Versorgungsästen verbunden.

Im tatsächlichen Betrieb einer Hochdruckentladungslampe ist eine Brennspannung von größenordnungsmäßig 80 V - 150 V notwendig, die tatsächlich kleiner ist als die üblicherweise zur Verfügung stehenden halbierten Zwischenkreisspannungen. Daher wird hier während einer Schaltphase, in der beispielsweise der Halbbrückentransistor S₁ leitend ist, dieser getaktet unterbrochen, um gemeinsam mit der Drossel L₁ während dieser Schaltphase einen Tiefsetzerbetrieb zu erzeugen. Dadurch kann durch den Tiefsetzerbetrieb eine gewünschte Lampenbrennspannung eingestellt werden.

Andererseits benötigt eine Hochdruckentladungslampe für den Übergang von einer sich an die eigentliche Zündung anschließenden Glimmentladung in die Bogenentladung eine gewisse Zeitdauer, in der eine gegenüber der Brennspannung deutlich überhöhte Übernahmespannung im Bereich von typischerweise 260 V - 330 V zur Verfügung stehen muss. Dieser Wert liegt regelmäßig über der halbierten Zwischenkreisspannung. Die mit dem Tiefsetzer kombinierte Halbbrücke kann diese Spannung nicht ohne weiteres erzeugen.

Erfindungsgemäß wird während der Übernahmephase eine Resonanz eines Lampenresonanzkreises angeregt, der aus den Kondensatoren C₁ - C₃ und der Drossel L₁ besteht. Dadurch wird eine Spannungsüberhöhung bewirkt, mit der die gewünschte Übernahmespannung erzeugt werden kann. Erfindungsgemäß wird diese Resonanzanregung jedoch nur für die Übernahmespannung und nicht für die Zündspannung verwendet, so dass die Filterkondensatoren eine gewünschte Größe von typischerweise 50 nF bei einem Vorschaltgerät für eine 35 W-Lampe oder 100 nF bei einem Vorschaltgerät für eine 70 W-Lampe und entsprechenden Kapazitäten bei anderen Lampenleistungen haben können. Dabei handelt es sich faktisch um die effektive Gesamtkapazität der Kondensatoren C₁ bis C₃. Würde mit dieser effektiven Filterkapazität eine Resonanzzündung erfolgen, so würden in Folge der notwendigen Zündspannungen von größenordnungsmäßig 1,5 kV - 5 kV zusammen mit der genannten Kapazität erhebliche Ströme entstehen. Die Drossel L₁ müsste dementsprechend sehr groß dimensioniert werden, um die damit korrelierende Energie aufnehmen zu können. (Diese Energie ist proportional zur Filterkapazität und zum Quadrat der Spannung.) Eine solche Drosseldimensionierung wird gemäß der Erfindung als hinsichtlich der Baugröße und der Kosten ungünstig angesehen.

Eine Erhöhung der Zwischenkreisspannung käme zwar als Lösung in Betracht, ist jedoch wegen der Dimensionierung der Bauteile der Halbbrücke und einer eventuellen Leistungsfaktorkorrekturschaltung und auch beim Wirkungsgrad mit Nachteilen verbunden.

Die genannte Resonanzanregung zur Erzeugung der Übernahmespannung erfolgt erfindungsgemäß bei geringeren Frequenzen als die Resonanzfrequenz des Lampenresonanzkreises, bei diesem Ausführungsbeispiel etwa bei der halbierten Resonanzfrequenz, und zwar bei dem 0,55-fachen der Resonanzfrequenz. Damit entstehen nur moderate Spannungsüberhöhungen, die jedoch für die Übernahmephase völlig ausreichen. Insbesondere ist durch die Frequenzlage unterhalb der Resonanzfrequenz sichergestellt, dass es bei eventuellen unbeabsichtigten Sättigungserscheinungen oder anderen Schwankungen nicht zu grundsätzlichen Instabilitäten kommt. Insbesondere können damit ein schneller Regler und eine schnelle Spannungs- oder Strommessung an dem Lampenresonanzkreis vermieden werden.

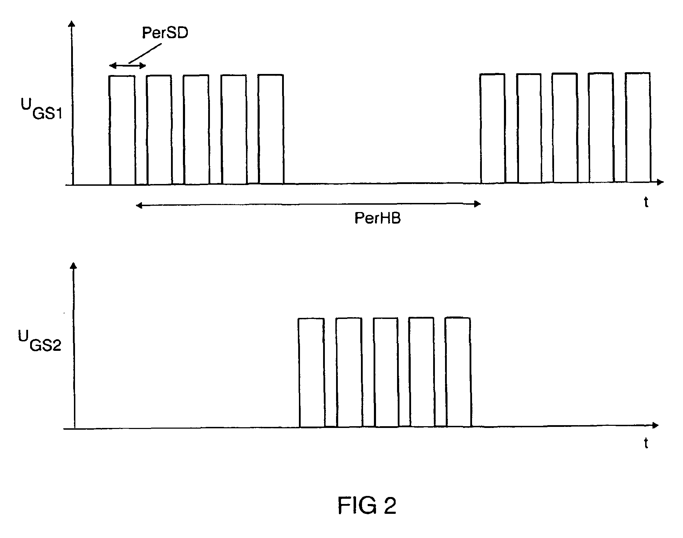

Figur 2 zeigt schematisch die Taktung des Schaltbetriebs der beiden Transistoren S₁ und S₂ aus Figur 1. Der obere Teil steht für den oberen Transistor S₁ (UGS1), der untere für den unteren Transistor S₂ (UGS2). Man erkennt, dass hier zwei Perioden auftreten, und zwar zum einen eine längere Periode zwischen den Pulspaketen (PerHB) und zum anderen eine kürzere Periode innerhalb der Pulspakete (PerSD). Qualitativ entspricht dies der bereits geschilderten Kombination aus Tiefsetzerbetrieb und Halbbrückenfunktion, wobei die kurze Periode für den Tiefsetzerbetrieb und die längere für die Halbbrückenfunktion steht.

Hier geht es allerdings um den Betrieb während der Übernahmephase. Die längere Periode steht hierbei für die resonanznahe Anregung bei etwa der 0,55-fachen Resonanzfrequenz. Innerhalb der entsprechenden, durch das hochliegende Niveau der Gatespannung des entsprechenden Transistors dargestellten leitenden Phase erfolgt eine "Zerhackung", also eine Modulation mit der kürzeren Periodendauer. Diese liegt deutlich über der Resonanzfrequenz, könnte aber in bestimmten Fällen auch kleiner als die Resonanzfrequenz sein. Es sollte lediglich vermieden werden, zu stark in die Nähe der Resonanzfrequenz zu geraten. Mit der "Zerhackung" kann gewissermaßen die effektive wirksame Amplitude der rechteckförmigen Anregung mit der 0,55-fachen Resonanzfrequenz vermindert werden. Durch eine "Zerhackung" mit deutlich höherer Frequenz ist für den Resonanzkreis gewissermaßen nur der Mittelwert relevant. Eine Ergänzung oder Alternative würde übrigens darin bestehen, die Einschaltphasen gegenüber dem hälftigen Zeitanteil zu verkürzen, also gewissermaßen die "Zerhackerpulse" synchron an den Anfang oder das Ende einer leitenden Phase zu setzen.

Figur 3 zeigt ein reales Diagramm zu der Vorschaltgeräteschaltung aus Figur 1. Die oberste Kurve bei Kanal 1 zeigt die Gatespannung des unteren Halbbrückentransistors S₂, die mittlere Kurve bei Kanal 2 das Potential des Halbbrückenmittelpunkts und die untere Kurve bei Kanal 3 die Spannung über der Lampe.

Der deutliche Ausschlag der Lampenspannung etwa am Ende des ersten Kästchens von links zeigt die Zündung der Lampe mit Hilfe der Zündschaltung G₁. Die dadurch angeregte hochfrequente Resonanz ist für die Erfindung nicht von weiterem Belangen und hat mit Streuinduktivitäten der Zündschaltung G₁ in Verbindung mit bestimmten Kapazitäten zu tun. Man erkennt jedoch, dass der anhand Figur 2 dargestellte "zerhackte" Rechteckschaltbetrieb des Halbbrückentransistors bereits vor der Zündung vorliegt. Dort bewirkt er zwar keine Zündung und demzufolge auch keine Übernahme, schadet jedoch auch nicht. Es muss nicht einmal eine Synchronisierung auf den Zündvorgang erfolgen. Vielmehr sorgt der geschilderte "zerhackte" Halbbrückenbetrieb für eine resonanznahe (0,55-fache Resonanzfrequenz) Anregung mit einer entsprechenden Spannungsüberhöhung über der Lampe. Im vorliegenden Fall ergeben sich, wie Figur 3 zeigt, Spannungsamplituden über der Lampe von fast ± 400 V. Diese Anregung erfolgt mit der bei Kanal 2 dargestellten Wechselspannung am Brückenmittelpunkt. Dort ist nicht nur der "Zerhackerbetrieb" des unteren Schalttransistors S₂ sondern in den dazwischenliegenden Schaltphasen auch der des oben liegenden Schalttransistors S₁ zu sehen. Ferner erkennt man, dass jeweils nur die ersten beiden Gatespannungseinbrüche Einfluss auf die Spannung am Brückenmittelpunkt haben. Dies hat zu tun mit den in Figur 1 erkennbaren Freilaufdioden parallel zu den Schalttransistoren S₁ und S₂. Abhängig vom Vorzeichen des Drosselstroms durch die Drossel L₁ führen diese den Strom, so dass die Modulation der Gatespannung ohne Auswirkung bleibt.

Typische Resonanzfrequenzen liegen etwa bei 20 kHz - 40 kHz. Im vorliegenden Fall beträgt die effektive Gesamtkapazität der Filterkondensatoren 100 nF und die Induktivität der Drossel L₁ 500 µH. Die Anregungsgrundfrequenz beträgt 12,5 kHz, die Resonanzfrequenz etwa 22,5 kHz.

In der Lampenspannung auf Kanal 3 lässt sich erkennen, dass mit dem Übergang von der leitenden Schaltphase eines Schalttransistors zur leitenden Schaltphase des anderen näherungsweise eine Sinusperiode der Lampenspannung beginnt. Dabei entsprechen die beiden Schultern zwischen den Extremwerten der Lampenspannung dem Start und dem Ende solcher Sinusperioden, also näherungsweise den Extrema der einzelnen Sinusperiode. Es handelt sich um Sprungantworten auf die Resonanzanregung in Folge der gegenüber der Resonanzfrequenz deutlich niedrigeren Anregungsfrequenz. Dabei schwingt die Lampenspannung mit doppelter Anregungsamplitude durch und würde dann eine Sinusschwingung um die Anregungsamplitude herum durchführen, von der jedoch nur ein erstes Stück zu sehen ist. Dies liegt gerade an dem näherungsweise der Zahl 2 entsprechenden Verhältnis zwischen Anregungsfrequenz und Resonanzfrequenz.

Die Höhe der Übernahmespannung lässt sich also zum einen durch die Wahl der Anregungsfrequenz, zum anderen durch den "Zerhackerbetrieb" und zum dritten natürlich durch die zeitliche Ausdehnung der leitenden Phasen der Schalttransistoren einstellen.

Figur 3 zeigt, dass die "Zerhackerfrequenz" etwa der 8-fachen Anregungsgrundfrequenz entspricht. Dabei wird ein Dutycyde innerhalb der Modulationsfrequenz, also ein Verhältnis zwischen Einschaltphase und zugeordnete Ausschaltphase durch die "Zerhackung" , von etwa 85 % erreicht (der Dutycicle ist nur auf die Modulation bezogen und nicht auf die Grundtaktung).

## Patentansprüche

1. Elektronisches Vorschaltgerät zum Betreiben einer Hochdruckentladungslampe (Lp) mit
- einem Wandler beinhaltend eine Halbbrücke mit zwei Schalttransistoren (S₁, S₂) zum Erzeugen einer Brennspannung zum Dauerbetrieb der Lampe (Lp) durch einen Schaltbetrieb der Schalttransistoren (S₁, S₂),
- einer Resonanzschaltung (L₁, C₁₋₃),
- einer Zündschaltung (G₁) mit einem Zündkondensator zum Zünden der Hochdruckentladungslampe durch eine Entladung und ggf. Hochtransformation der Ladung des Zündkondensators,
wobei
- das elektronische Vorschaltgerät dazu ausgelegt ist, durch einen hochfrequenten Betrieb der Schalttransistoren (S₁, S₂) des Wandlers eine Resonanz der Resonanzschaltung (L₁, C₁₋₃) anzuregen, um damit eine gegenüber der Brennspannung überhöhte Spannungsamplitude für die Lampe (Lp) während einer an eine Zündung anschließende Übernahmephase zu erzeugen,
- wobei die Anregung der Resonanz der Resonanzschaltung (L₁, C₁₋₃) mit einer Anregungsgrundfrequenz des Schaltbetriebs der Schalttransistoren (S₁, S₂) erfolgt,
**dadurch gekennzeichnet, dass**
- die Anregungsgrundfrequenz des Schaltbetriebs der Schalttransistoren (S₁, S₂) kleiner ist als eine Resonanzfrequenz der Resonanzschaltung, und
- das elektronische Vorschaltgerät dazu ausgelegt ist, die mittlere Spannungsamplitude während der Übernahmephase durch ein wiederholtes Ausschalten in den Einschaltphasen der Schalttransistoren (S₁, S₂) mit einer gegenüber der Anregungsgrundfrequenz deutlich erhöhten Frequenz abzusenken, und
- die Resonanzschaltung einen Filterkondensator (C₁₋₃) zum Filtern von Ripplestörungen in der Brennspannung aufweist.

2. Vorschaltgerät nach Anspruch 1, bei dem die Resonanzschaltung (L₁, C₁₋₃) eine Lampendrossel (L₁) als induktives Element enthält.

3. Vorschaltgerät nach Anspruch 1 oder 2, bei dem der Wandler dazu ausgelegt ist, im Dauerbetrieb der Lampe (Lp) als niederfrequenter Inverter und innerhalb der Inverter-Schaltphasen als Tiefsetzer zur Lampenstromregelung zu arbeiten.

4. Vorschaltgerät nach einem der vorstehenden Ansprüche, bei dem die Resonanzanregung bei einer Grundfrequenz von höchstens dem 0,9-fachen der Resonanzfrequenz der Resonanzschaltung (L₁, C₁₋₃) erfolgt.

5. Vorschaltgerät nach Anspruch 4, bei dem die Resonanzanregung bei einer Grundfrequenz zwischen einschließlich dem 0,4-fachen bis einschließlich dem 0,9-fachen der Resonanzfrequenz der Resonanzschaltung (L₁, C₁₋₃) erfolgt.

6. Vorschaltgerät nach Anspruch 1, bei dem die Frequenz des wiederholten Ausschaltens in den Einschaltphasen der Schalttransistoren (S₁, S₂) deutlich über der Resonanzfrequenz der Resonanzschaltung (L₁, C₁₋₃) liegt.

7. Vorschaltgerät nach einem der vorstehenden Ansprüche, bei dem die Kapazität des Filterkondensators (C₁₋₃) zumindest 1 nF/Watt Lampenleistung beträgt.

8. Vorschaltgerät nach einem der vorstehenden Ansprüche, bei dem die Spannungsamplituden während der Resonanzanregung höchstens 800 V Spitze-Spitzebetragen.

9. Beleuchtungsgerät mit einem Vorschaltgerät nach einem der Ansprüche 1 - 8 und einer Hochdruckentladungslampe (L).

10. Verfahren zum Betreiben einer Hochdruckentladungslampe (Lp) mit den Schritten:
- Zünden der Hochdruckentladungslampe mit einer Zündschaltung (G₁) aufweisend einen Zündkondensator durch eine Entladung und ggf. Hochtransformation der Ladung des Zündkondensators,
- Versorgen der Lampe im Dauerbetrieb mit einer Brennspannung durch einen Schaltbetrieb zweier Schalttransistoren (S₁, S₂) eines Halbbrückenwandlers,
- während einer an die Zündung anschließenden Übernahmephase Erzeugen einer gegenüber der Brennspannung überhöhten Spannungsamplitude durch eine Resonanzanregung in einer Resonanzschaltung (L₁, C₁₋₃), wobei die Resonanzanregung durch einen hochfrequenten Betrieb der Schalttransistoren (S1, S2) des Halbbrückenwandlers erfolgt,
**dadurch gekennzeichnet, dass**
- die Resonanzanregung durch eine Anregungsgrundfrequenz des Schaltbetriebs der Schalttransistoren (S₁, S₂) erfolgt, deren Frequenz niedriger ist als die Resonanzfrequenz der Resonanzschaltung,
- die mittlere Spannungsamplitude während der Übemahmephase durch ein wiederholtes Ausschalten in den Einschaltphasen der Schalttransistoren (S₁, S₂) mit einer gegenüber der Anregungsgrundfrequenz deutlich erhöhten Frequenz abgesenkt wird, und
- Rippfestörungen in der Brennspannung der Lampe durch einen in der Resonanzschaltung enthaltenen Filterkondensator (C₁₋₃) gefiltert werden.

11. Verfahren zum Betreiben einer Lampe (Lp) nach Anspruch 10 mit einem Vorschaltgerät nach einem der Ansprüche 2 - 8.

## Claims

1. Electronic ballast for operating a high-pressure discharge lamp (Lp) having
- a converter containing a half-bridge having two switching transistors (S₁, S₂) for the purpose of generating an operating voltage for continuous operation of the lamp (Lp) by means of a switching operation of the switching transistors (S₁, S₂),
- a resonant circuit (L₁, C₁₋₃),
- a starting circuit (G1) having a starting capacitor for the purpose of starting the high-pressure discharge lamp by a discharge and possibly step-up transformation of the charging of the starting capacitor,
wherein
- the electronic ballast is designed to excite a resonance in the resonant circuit (L₁, C₁₋₃) by means of radiofrequency operation of the switching transistors (S₁, S₂) of the converter, in order thus to generate a voltage amplitude for the lamp (Lp), which is greater than the operating voltage, during a transfer phase following starting,
- wherein the excitation of the resonance of the resonant circuit (L₁, C₁₋₃) takes place at a fundamental excitation frequency of the switching operation of the switching transistors (S1, S2),
**characterized in that**
- the fundamental excitation frequency of the switching operation of the switching transistors (S₁, S₂) is lower than a resonant frequency of the resonant circuit, and
- the electronic ballast is designed to reduce the average voltage amplitude during the transfer phase by repeated disconnection in the switch-on phases of the switching transistors (S₁, S₂) at a frequency which is markedly higher than the fundamental excitation frequency, and
- the resonant circuit has a filter capacitor (C₁₋₃) for the purpose of filtering ripple interference in the operating voltage.

2. Ballast according to Claim 1, in which the resonant circuit (L₁, C₁₋₃) contains a lamp inductor (L₁) as the inductive element.

3. Ballast according to Claim 1 or 2, in which the converter is designed to operate, during continuous operation of the lamp (Lp), as a low-frequency inverter and, within the inverter switching phases, as a step-down converter for the purpose of regulating the lamp current.

4. Ballast according to one of the preceding claims, in which the resonance excitation takes place at a fundamental frequency of at most 0.9 times the resonant frequency of the resonant circuit (L₁, C₁₋₃).

5. Ballast according to Claim 4, in which the resonance excitation takes place at a fundamental frequency between 0.4 times and 0.9 times, inclusive, the resonant frequency of the resonant circuit (L₁, C₁₋₃).

6. Ballast according to Claim 1, in which the frequency of the repeated disconnection in the switch-on phases of the switching transistors (S₁, S₂) is markedly above the resonant frequency of the resonant circuit (L₁, C₁₋₃).

7. Ballast according to one of the preceding claims, in which the capacitance of the filter capacitor (C₁₋₃) is at least 1 nF/watt of lamp power.

8. Ballast according to one of the preceding claims, in which the voltage amplitudes during resonance excitation are at most 800 V (peak-to-peak).

9. Illumination device having a ballast according to one of Claims 1 - 8 and a high-pressure discharge lamp (Lp).

10. Method for operating a high-pressure discharge lamp (Lp) having the following steps:
- starting the high-pressure discharge lamp with a starting circuit (G₁) having a starting capacitor by a discharge and possibly step-up transformation of the charging of the starting capacitor,
- supplying an operating voltage to the lamp during continuous operation by means of a switching operation of two switching transistors (S1, S2) of a half-bridge converter,
- during a transfer phase following starting, generating a voltage amplitude which is greater than the operating voltage by resonance excitation in a resonant circuit (L₁, C₁₋₃), wherein the resonance excitation takes place by means of radiofrequency operation of the switching transistors (S₁, S₂) of the half-bridge converter,
**characterized in that**
- the resonance excitation takes place by means of a fundamental excitation frequency of the switching operation of the switching transistors (S₁, S₂), whose frequency is lower than the resonant frequency of the resonant circuit,
- the average voltage amplitude is reduced during the transfer phase by repeated disconnection in the switch-on phases of the switching transistors (S₁, S₂) at a frequency which is markedly higher than the fundamental excitation frequency,
and
- ripple interference in the operating voltage of the lamp is filtered by a filter capacitor (C₁₋₃) contained in the resonant circuit.

11. Method for operating a lamp (Lp) according to Claim 10 having a ballast according to one of Claims 2 - 8.

## Revendications

1. Ballast électronique pour faire fonctionner une lampe à décharge haute pression (Lp), comprenant
- un transformateur comportant un demi-pont avec deux transistors de commutation (S₁, S₂) pour produire une tension de décharge pour le fonctionnement continu de la lampe (Lp) grâce à un mode de commutation des transistors de commutation (S₁, S₂),
- un circuit résonant (L₁, C₁₋₃),
- un circuit d'allumage (G₁) comprenant un condensateur d'allumage pour allumer la lampe à décharge haute pression grâce à une décharge et éventuellement une augmentation de la charge du condensateur d'allumage,
- le ballast électronique étant conçu pour exciter une résonance du circuit résonant (L₁, C₁₋₃) grâce à un fonctionnement à haute fréquence des transistors de commutation (S₁, S₂) du transformateur, afin de produire ainsi une amplitude de tension excessive par rapport à la tension de décharge pour la lampe (Lp) pendant une phase de prise en charge qui suit un allumage,
- l'excitation de la résonance du circuit résonant (L₁, C₁₋₃) ayant lieu à une fréquence fondamentale d'excitation du mode de commutation des transistors de commutation (S₁, S₂),
**caractérisé en ce que**
- la fréquence fondamentale d'excitation du mode de commutation des transistors de commutation (S₁, S₂) est inférieure à une fréquence de résonance du circuit résonant, et
- le ballast électronique est conçu pour abaisser l'amplitude de tension moyenne pendant la phase de prise en charge grâce à un arrêt répété durant les phases de mise en marche des transistors de commutation (S₁, S₂) à une fréquence nettement augmentée par rapport à la fréquence fondamentale d'excitation, et
- le circuit résonant comporte un condensateur de filtrage (C₁₋₃) pour éliminer les interférences dues aux ondulations dans la tension de décharge.

2. Ballast électronique selon la revendication 1, dans lequel le circuit résonant (L₁, C₁₋₃) comporte un self de lampe (L₁) en tant qu'élément inductif.

3. Ballast électronique selon la revendication 1 ou 2, dans lequel le transformateur est conçu pour fonctionner en tant qu'inverseur basse fréquence en fonctionnement continu de la lampe (Lp) et en tant que convertisseur abaisseur à l'intérieur des phases de commutation de l'inverseur.

4. Ballast électronique selon l'une des revendications précédentes, dans lequel l'excitation de résonance a lieu à une fréquence fondamentale ne dépassant pas 0,9 fois la fréquence de résonance du circuit résonant (L₁, C₁₋₃).

5. Ballast électronique selon la revendication 4, dans lequel l'excitation de résonance a lieu à une fréquence fondamentale comprise entre 0,4 fois et 0,9 fois la fréquence de résonance du circuit résonant (L₁, C₁₋₃).

6. Ballast électronique selon la revendication 1, dans lequel la fréquence de l'arrêt répété durant les phases de mise en marche des transistors de commutation (S₁, S₂) est nettement supérieure à la fréquence de résonance du circuit résonant (L₁, C₁₋₃).

7. Ballast électronique selon l'une des revendications précédentes, dans lequel la capacité du condensateur de filtrage (C₁₋₃) est au moins égale à 1 nF par watt de puissance de lampe.

8. Ballast électronique selon l'une des revendications précédentes, dans lequel les amplitudes de tension durant l'excitation de résonance ne dépassent pas 800 V crête à crête.

9. Appareil d'éclairage comprenant un ballast électronique selon l'une des revendications 1 à 8 et une lampe à décharge haute pression (L).

10. Procédé pour faire fonctionner une lampe à décharge haute pression (Lp) comprenant les étapes :
- allumage de la lampe à décharge haute pression au moyen d'un circuit d'allumage (G₁) comportant un condensateur d'allumage grâce à une décharge et éventuellement une augmentation de la charge du condensateur d'allumage,
- alimentation de la lampe en fonctionnement continu avec une tension de décharge grâce à un mode de commutation de deux transistors de commutation (S₁, S₂) d'un transformateur en demi-pont,
- pendant une phase de prise en charge qui suit l'allumage, production d'une amplitude de tension excessive par rapport à la tension de décharge grâce à une excitation de résonance dans un circuit résonant (L₁, C₁₋₃), l'excitation de résonance ayant lieu grâce à un fonctionnement à haute fréquence des transistors de commutation (S₁, S₂) du transformateur en demi-pont,
**caractérisé en ce que**
- l'excitation de résonance a lieu grâce à une fréquence fondamentale d'excitation du mode de commutation des transistors de commutation (S₁, S₂) dont la fréquence est inférieure à la fréquence de résonance du circuit résonant,
- l'amplitude de tension moyenne est abaissée pendant la phase de prise en charge grâce à un arrêt répété durant les phases de mise en marche des transistors de commutation (S₁, S₂) à une fréquence nettement augmentée par rapport à la fréquence fondamentale d'excitation, et
- les interférences dues aux ondulations dans la tension de décharge de la lampe sont éliminées par un condensateur de filtrage (C₁₋₃) compris dans le circuit résonant.

11. Procédé pour faire fonctionner une lampe (Lp) selon la revendication 10 comprenant un ballast selon l'une des revendications 2 à 8.
